Europäisches Patentamt

European Patent Office

Office européen des brevets

(19)

(11) Publication number: **0 251 155 B1**

# EUROPEAN PATENT SPECIFICATION

(12)

(45) Date of publication of patent specification: 27.03.91   (51) Int. Cl.⁵: **C01B 17/44**

(21) Application number: 87109012.2

(22) Date of filing: 23.06.87

(54) A Method of manufacturing barium sulphide.

(30) Priority: 23.06.86 PL 260218

(43) Date of publication of application:
07.01.88 Bulletin 88/01

(45) Publication of the grant of the patent:
27.03.91 Bulletin 91/13

(84) Designated Contracting States:
DE FR GB

(56) References cited:
DE-C- 541 469
FR-A- 423 228
US-A- 1 723 138

(73) Proprietor: **Politechnika Slaska im. Wincentego Pstrowskiego**
**ul. Krzywoustego 7**
**P-44-101 Gliwice(PL)**

(72) Inventor: **Starczewski, Marian**
**ul. Sielecka 57 m 49**
**Warszawa(PL)**
Inventor: **Switonska-Oskedra, Maria**
**ul. Przyjemna 5**
**Chorz w(PL)**
Inventor: **Grzywaczewski, Tadeusz**
**ul. Ogrodowa 1**
**Tarnowskie G ry(PL)**
Inventor: **Pisarski, Hubert**
**ul. Ogrodowa 1**
**Tarnowskie G ry(PL)**
Inventor: **Gazda, Stanislaw**
**ul. Doniecka 2b/5**
**Tarnowskie G ry(PL)**
Inventor: **Sybilska, Genowefa**
**ul. Derkacza 6 m 21**
**Gliwice(PL)**

(74) Representative: **von Füner, Alexander, Dr. et al**
**Patentanwälte v. Füner, Ebbinghaus, Finck**
**Mariahilfplatz 2 & 3**
**W-8000 München 90(DE)**

## Description

The subject of this present invention is a method of manufacturing barium sulphide by reducing baryte or barium sulphate.

Those skilled in the art know the method of manufacturing barium sulphide by reducing baryte with a carbon reducer /coke breeze/ involving converting water-soluble barium sulphate into soluble barium sulphide which is a semiproduct for the manufacture of lithopone and a number of othe barium compounds.

Research carried out has shown compounds of silicon, iron and aluminium which form sparingly soluble compounds /silicates and ferrates/ to have adverse effects during the process of reducing barium sulphate.

The method known from Polish Patent Specification No. 62,202 for intensifying the process of reducing barytes with coke breeze by addition of calcium chloride has not found industrial application due to a remarkable increase in the corrosiveness of process equipment. The coke breeze employed in this present reduction process contains about 12 per cent of ash which contains silicon, iron and aluminium compounds exerting an adverse effect on the barium sulphate reduction.

It has unexpectedly turned out that the application of $CaC_2$ to the process allows not only a high reduction rate of barium sulphate to be attained and the process temperature to be lowered, but also the quality of the article sintered to be markedly improved.

The method of manufacturing barium sulphide as per this present invention involves using finely divided calcium carbide for the reduction of barytes at a temperature above 873 K. It is preferred to use calcium carbide mixed with coke for the reducttion. It is also preferred to use an addition of borax to the calcium carbide or a mixture of borax, calcium carbide and coke for the reduction.

In comparison with the known method of reducing barytes with the application of coke at a temperature of 1573 K for three hours, the barium sulphate reduction process as per this present invention with the application of calcium carbide ensures a high degree of reduction within the limits of 98 per cent at a temperature of 1273 K after 60 minutes of conducting the reduction process. The amount of CaO increased as a result of the decomposition of $CaC_2$ causes an appropriate amount of silica to be bound to calcium silicate helping in markedly intensifying the reduction process.

### Example I

100 g of finely divided calcium carbide have been added to 400 g of floatation baryte /7% $H_2O$/ /containing 95% $BaSO_4$, 2% $SiO_2$, 0.6% $Fe_2O_3$ and 0.5% $CaF_2$ in terms of dry mass as the main components. The reduction process was held for 60 minutes at a temperature of 1273 K in a Sylite furnace.

On the basis of the analysis conducted, 90 per cent of barium sulphate has been found to be reduced to barium sulphide.

### Example II

40 g of calcium carbide and 60 g of coke breeze have been added to 400 g of floatation baryte of the composition mentioned in Example I. The process was held in a Sylite furnace at a temperature of 1323 K for 60 minutes.

96 % of barium sulphate has been reduced to barium sulphide.

## Claims

1. A method of manufacturing barium sulphide by reducing barytes or barium sulphate, characterised in that finely divided calcium carbide is used for the reduction at a temperature about 873 K.

2. A method as per Claim 1, characterized in that the calcium carbide is used mixed with coke.

3. A method as per Claim 1 or 2, characterised in that borax is added.

## Revendications

1. Procédé préparation de sulfure de baryum par réduction des barytes ou du sulfate de baryum, caractérisé en ce que l'on utilise du carbure de calcium finement divisé pour la réduction à une température supérieure à 873 K.

2. Procédé selon la revendication 1, caractérisé en ce que le carbure de calcium est utilisé en mélange avec du coke.

3. Procédé selon la revendication 1 ou 2, caractérisé en ce que l'on ajoute du borax.

## Ansprüche

1. Verfahren zur Herstellung von Bariumsulfid durch Reduktion von Baryten oder Bariumsulfat, **dadurch gekennzechnet,** daß zur Reduktion bei einer Temperatur von 873 K fein verteiltes Calciumcarbid verwendet wird.

2. Verfahren nach Anspruch 1, **dadurch gekennzeichnet** , daß das Calciumcarbid in einer Mischung mit Koks verwendet wird.

3. Verfahren nach Anspruch 1 oder 2, **dadurch gekennzeichnet**, daß Borax zugefügt wird.